Europäisches Patentamt

European Patent Office

Office européen des brevets

(19)

(11) Veröffentlichungsnummer: **0 037 365**
A1

(12) # EUROPÄISCHE PATENTANMELDUNG

(21) Anmeldenummer: 81730025.4

(22) Anmeldetag: 09.03.81

(51) Int. Cl.³: **G 01 F 3/06**

(30) Priorität: 28.03.80 DE 3012742

(43) Veröffentlichungstag der Anmeldung:
07.10.81 Patentblatt 81/40

(84) Benannte Vertragsstaaten:
CH FR GB LI

(71) Anmelder: SIEMENS AKTIENGESELLSCHAFT Berlin
und München
Postfach 22 02 61
D-8000 München 22(DE)

(72) Erfinder: Friebel, Eberhard, Dipl.-Ing.
Strasse J, Nr. 10
D-1000 Berlin 13(DE)

(72) Erfinder: Wagner, Heinz-Günter, Ing. grad.
Bandelstrasse 34
D-1000 Berlin 21(DE)

(54) Volumenzähler.

(57) Die Erfindung bezieht sich auf einen Volumenzähler mit mindestens einem Kolben, der eine ellipsenähnliche Kontur aufweist, und mit einem Trennschieber, der mit seinem freien Ende an der Umfangsfläche des Kolbens unter bildung einer Dichtungsstelle anliegt. Zur Verminderung von mechanischen Belastungen des Kolbens (1) und des Trennschiebers (7) ist der Kolben (1) bezüglich seiner Kontur (4) so ausgebildet, daß die Bewegung des Trennschiebers (7) mit einer Beschleunigung erfolgt, die stets stetig verläuft. Die Erfindung ist vor allem bei Flüssigkeitszählern anwendbar.

FIG 1

EP 0 037 365 A1

Croydon Printing Company Ltd.

COMPLETE DOCUMENT

SIEMENS AKTIENGESELLSCHAFT          Unser Zeichen
Berlin und München                  VPA 80 P 3728 E

## Volumenzähler

Die Erfindung bezieht sich auf einen Volumenzähler mit mindestens einem in einem Gehäuse sich drehenden Kolben, der eine ellipsenähnliche Kontur aufweist, und mit mindestens einem Trennschieber, der im Gehäuse geführt ist und mit seinem freien Ende an der Umfangsfläche des Kolbens unter Bildung einer Dichtungsstelle zwischen Einlauf und Auslauf des Gehäuses anliegt.

Bei einem bekannten Volumenzähler dieser Art (DE-AS 11 43 393) erfährt der Trennschieber wegen der gewählten Kontur des Kolbens stoßweise Beschleunigungen, die das Erreichen eines optimalen Betriebsverhaltens des Volumenzählers erschweren.

Der Erfindung liegt demgemäß die Aufgabe zugrunde, einen Volumenzähler zu schaffen, bei dem das Zusammenwirken von Kolben und Trennschieber unter Erzielung eines optimalen Betriebsverhaltens mit einfachen Mitteln verbessert ist.

Zur Lösung dieser Aufgabe ist bei einem Volumenzähler der eingangs angegebenen Art erfindungsgemäß der Kolben bezüglich seiner Kontur so ausgebildet, daß die Bewegung des Trennschiebers stets mit einer stetig verlaufenden Beschleunigung erfolgt.

Ag 3 Sby / 26.03.1980

Vorteilhaft ist der erfindungsgemäße Volumenzähler u. a. insofern, als sein Trennschieber während einer ganzen Umdrehung des Kolbens nur sich kontinuierlich ändernde Beschleunigungen erfährt. Die Reibungskräfte zwischen Trennschieber und Kolben ändern sich während der Drehbewegung des Kolbens somit nur langsam und nicht sprunghaft, wodurch die mechanischen Belastungen des Kolbens sowie des Trennschiebers und auch der Führung des Trennschiebers im Gehäuse stark vermindert sind; eine große Laufruhe des Volumenzählers, eine lange Lebensdauer von Trennschieber und Kolben sowie eine hohe Meßgenauigkeit sind das Ergebnis.

Die Erfindung macht sich die Erkenntnis zunutze, daß sich aus einem vorgegebenen, günstigen Beschleunigungsverlauf des Trennschiebers über eine Umdrehung des Kolbens durch zweimalige Integration der Bewegungsverlauf des Trennschiebers errechnen läßt; daraus wiederum läßt sich in Abhängigkeit vom Drehwinkel des Kolbens seine Kontur ermitteln. Dabei genügt die Ermittlung der Kolbenkontur über jeweils ein Viertel seiner gesamten Umfangsfläche, d. h. zwischen zwei aufeinanderfolgenden Endstellungen des Trennschiebers, da sich die Beschleunigungsverläufe in den anderen Abschnitten der Kontur zyklisch lediglich mit anderen Vorzeichen wiederholen.

Bei einer vorteilhaften Ausführungsform des erfindungsgemäßen Volumenzählers ist der Kolben bezüglich seiner Kontur so ausgebildet, daß die Beschleunigung des Trennschiebers im Bereich zwischen seinen jeweils aufeinanderfolgenden Endstellungen zwischen dem Wert Null und ihrem positiven bzw. negativen Höchstwert geradlinig verläuft. Diese Ausführungsform bietet den Vorteil, daß sich die Kontur des Kolbens auf verhältnismäßig einfache Weise ermitteln läßt.

Als besonders vorteilhaft wird es angesehen, wenn beim
erfindungsgemäßen Volumenzähler der Kolben bezüglich
seiner Kontur so ausgebildet ist, daß die Beschleunigung des Trennschiebers im Bereich zwischen seinen jeweils aufeinanderfolgenden Endstellungen sinusförmig
verläuft. Der Vorteil eines solchen Volumenzählers besteht darin, daß die Beschleunigungen des Trennschiebers und damit auch die mechanischen Belastungen
vergleichsweise niedrige Spitzenwerte annehmen. Außerdem ist die Ermittlung der Kolbenkontur besonders
einfach, da die mathematische Behandlung von sinusförmigen Beschleunigungsverläufen einfach ist.

Es ist weiterhin vorteilhaft, wenn der Trennschieber an
seinem freien Ende abgerundet ist, wobei der Abrundungsradius einen Wert aufweist, der das 0,5- bis 0,6-fache
der Dicke des Trennschiebers beträgt. Dadurch ergibt
sich der Vorteil, daß die mechanische Beanspruchung des
Trennschiebers über eine relativ große Fläche seines
freien Endes verteilt wird, weil sich die Dichtungsstelle zwischen Trennschieber und Kolben bei der Drehung
des Kolbens ständig auf der Oberfläche des freien Endes
des Trennschiebers verschiebt. Die durch den Abrundungsradius des freien Endes des Trennschiebers veränderliche
Lage der Dichtungsstelle kann auf einfache Weise bei der
Gestaltung der Kolbenkontur berücksichtigt werden.

Eine besonders günstige Gestaltung des Trennschiebers ergibt sich, wenn der Trennschieber eine Dicke aufweist, die das 0,125- bis 0,2-fache des größten Kolbenhalbmesser R beträgt. Bei dieser Ausführungsform ist gewährleistet, daß die Abmessungen des Trennschiebers optimal an die des Kolbens angepaßt sind, so daß die Reibungsverluste zwischen dem Trennschieber und dem Kolben an der Dichtungsstelle sowie zwischen Trennschieber und seiner Führung gering sind.

Weiterhin ist in vorteilhafter Weise bei einem vorgegebenen Füllvolumen eine große Laufruhe des Kolbens bei einer Bemessung gewährleistet, bei der das Verhältnis des kleinsten Kolben halbmesser r zum größten Kolbenhalbmesser R zwischen den Werten 0,5 und 0,7 liegt.

Die Erfindung wird anhand der Figuren erläutert, wobei
Fig. 1 einen Schnitt durch ein Ausführungsbeispiel des erfindungsgemäßen Volumenzählers darstellt,
Fig. 2 den Beschleunigungs-, Geschwindigkeits- und Bewegungsverlauf des Trennschiebers dieses Ausführungsbeispiels bei einer Umdrehung des Kolbens und bei sinusförmig verlaufender Beschleunigung des Trennschiebers zeigt,
Fig. 3 den Beschleunigungs-, Geschwindigkeits- und Wegverlauf des Trennschiebers eines anderen Ausführungsbeispiels bei einer Umdrehung des Kolbens und bei geradlinig verlaufender Beschleunigung wiedergibt und
Fig. 4 einen Abschnitt der Kontur des Kolbens mit anliegendem Trennschieber bei sinusförmiger Beschleunigung darstellt.

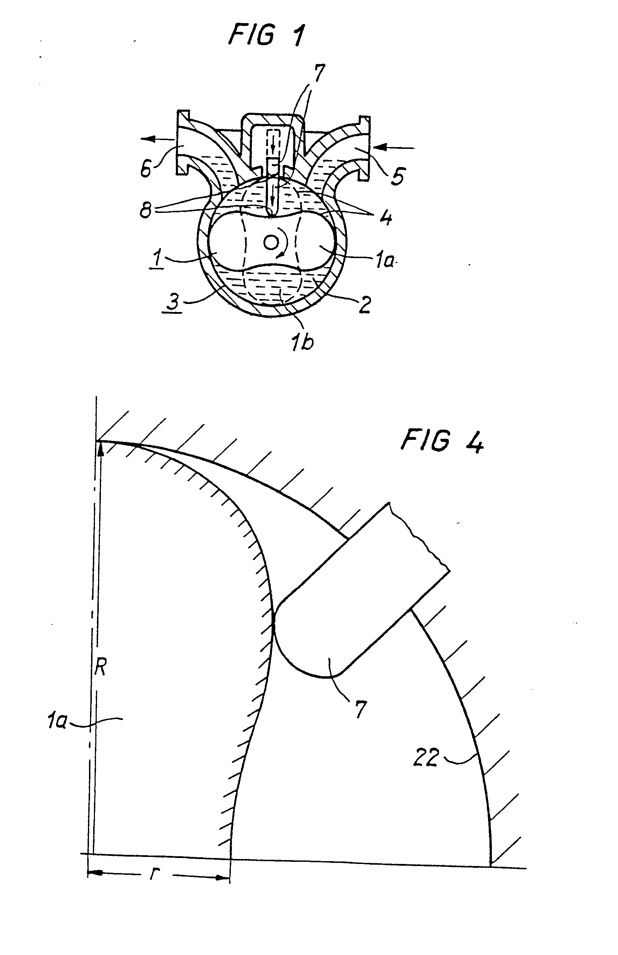

Bei einem Volumenzähler gemäß der Fig. 1 ist ein Kolben 1 drehbar in einer Meßkammer 2 eines Gehäuses 3 gelagert. Der Kolben 1 ist als Doppelkolben mit jeweils zwei Teilkolben 1a und 1b ausgebildet, die jeweils eine übereinstimmende ellipsenähnliche Kontur 4 aufweisen. Das Gehäuse 3 weist einen Einlauf 5 und einen Auslauf 6 auf. Zwischen Einlauf 5 und Auslauf 6 des Gehäuses 3 befinden sich Trennschieber 7, wobei die Trennschieber 7 mit ihren freien Enden 8 unter Bildung von Dichtstellen an den Teilkolben 1a bzw. 1b anliegen. Die Trennschieber 7 sind im Inneren des Gehäuses 3 geführt.

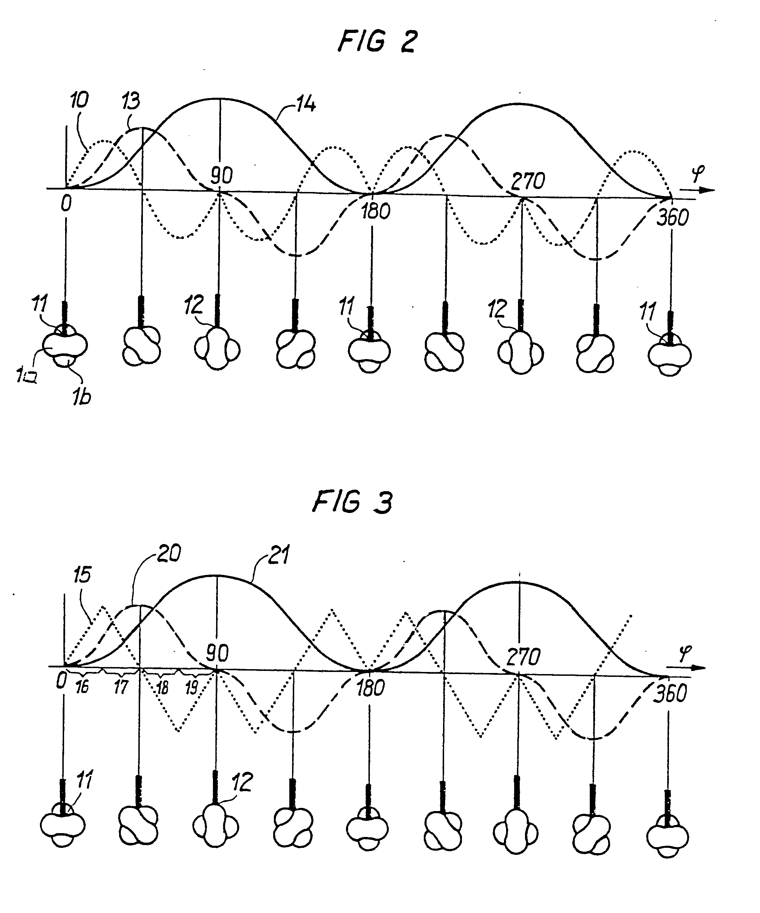

In der Fig. 2 ist der Verlauf 10 einer sinusförmig angenommenen Beschleunigung des Trennschiebers 7 über dem Drehwinkel $\varphi$ des Teilkolbens 1a aufgetragen. Zur Ermittlung der erforderlichen Kontur des Teilkolbens 1a, die diesen gewünschten Beschleunigungsverlauf 10 des Trennschiebers 7 hervorrufen soll, ist von einem sinusförmigen Beschleunigungsverlauf des Trennschiebers 7 gemäß folgender Gleichung (1) ausgegangen:

$$b = (R-r) \cdot C \cdot \sin 4\varphi \tag{1}$$

Darin bedeuten
b die Beschleunigung des Trennschiebers 7,
R der größte Halbmesser des Teilkolbens 1a,
r der kleinste Halbmesser des Teilkolbens 1a,
C eine Konstante sowie
$\varphi$ der Drehwinkel des Teilkolbens 1a.
Diese Gleichung (1) ist nur für den Bereich zwischen jeweils aufeinanderfolgenden Endstellungen 11 und 12 des Trennschiebers 7 im zugeordneten Drehwinkelbereich des Teilkolbens 1a definiert. Dieser Beschleunigungsverlauf 10 wiederholt sich während einer Umdrehung des Teilkolbens zyklisch, lediglich mit anderem Vorzeichen.

Durch Integration der Beschleunigung b über den Drehwinkel $\varphi$ ergibt sich der Geschwindigkeitsverlauf des Trennschiebers 7:

$$v = (R-r) \cdot C \cdot (1-\cos 4\varphi). \qquad (2)$$

Wobei v die Geschwindigkeit des Trennschiebers 7 darstellt. Die Kurve 13 in Fig. 2 gibt diesen Verlauf wieder.

Nach einer Integration des Geschwindigkeitsverlaufs ergibt sich der Bewegungsverlauf des Trennschiebers 7:

$$s = (R-r) \cdot (\frac{4\varphi}{360} - \frac{1}{2\pi} \cdot \sin 4\varphi) \qquad (3)$$

Wobei s den Weg des Trennschiebers 7 bezeichnet. Den Bewegungsverlauf zeigt die Kurve 14 in Fig. 2.

Diese Kurve 14 stellt die erforderliche Veränderung des Kolbenhalbmessers zwischen den Endstellungen 11 und 12 für den Fall dar, daß der Trennschieber mit einem schneidenförmigen freien Ende an dem Kolben anliegt; für den praktischen Fall - Trennschieber mit abgerundetem freien Ende - lassen sich die Kolbenhalbmesser und somit die Kontur des Teilkolbens 1a bzw. 1b unter Berücksichtigung der Abrundung aus dieser Kurve 14 ermitteln.

Bei einem in Fig. 3 dargestellten Beschleunigungsverlauf 15 des Trennschiebers 7 ist von einem in Abschnitten 16,17,18 und 19 geradlinigen Verlauf der Beschleunigung des Trennschiebers 7 ausgegangen; der Abschnitt 16 ist begrenzt durch den Wert Null und den positiven Höchstwert der Beschleunigung, der Abschnitt 17 durch diesen Höchstwert und dem darauffolgenden Wert Null der Beschleunigung, der Abschnitt 18 durch diesen Wert Null und den negativen Höchstwert der Beschleunigung und der Abschnitt 19 durch diesen negativen Höchstwert und dem Wert Null. Für den Verlauf der Beschleunigung b gilt im Abschnitt 16

$$b_{16} = (R-r) \cdot C_1 \cdot \left(\frac{\varphi}{360}\right), \tag{4}$$

im Abschnitt 17

$$b_{17} = (R-r) \cdot C_1 \cdot \left[C_2 - \left(\frac{\varphi}{360}\right)\right], \tag{5}$$

im Abschnitt 18

$$b_{18} = (R-r) \cdot C_1 \cdot \left[C_2 - \left(\frac{\varphi}{360}\right)\right] \text{ und} \tag{6}$$

im Abschnitt 19

$$b_{19} = (R-r) \cdot C_1 \cdot \left[C_3 + \left(\frac{\varphi}{360}\right)\right]. \tag{7}$$

Die Größen $C_1$, $C_2$ und $C_3$ stellen Konstanten dar.

Durch Integration dieses Beschleunigungsverlaufs 15 ergibt sich der Geschwindigkeitsverlauf 20; nach einer Integration dieses Geschwindigkeitsverlaufs 20 erhält man den Verlauf 21 der Bewegung des Trennschiebers 7. Es gilt für den Weg des Trennschiebers 7 im Abschnitt 16:

$$s_{16} = (R-r) \cdot C_4 \cdot \left(\frac{\varphi}{360}\right)^3, \tag{8}$$

im Abschnitt 17 bzw. 18

$$s_{17} = s_{18} = (R-r) \cdot C_5 \cdot \left(C_6 - C_7 \cdot \left(\frac{\varphi}{360}\right) + C_8 \cdot \left(\frac{\varphi}{360}\right)^2 - C_9 \cdot \left(\frac{\varphi}{360}\right)^3\right) \tag{9}$$

und im Abschnitt 19

$$s_{19} = (R-r) \cdot C_5 \cdot \left(-C_{10} + C_{11} \cdot \left(\frac{\varphi}{360}\right) - C_{12} \cdot \left(\frac{\varphi}{360}\right)^2 + C_9 \left(\frac{\varphi}{360}\right)^3\right) \tag{10}$$

Die Größen $C_4$ bis $C_{12}$ stellen Konstanten dar.

Die Kontur des Teilkolbens 1a bzw. 1b wird hier in ähnlicher Weise wie bei dem gemäß der Fig.2 zugrundegelegten sinusförmigen Beschleunigungsverlauf des Trennschiebers 7 ermittelt.

In der Fig. 4 ist ein Teil des Teilkolbens 1a, der Wand 22 der Meßkammer 2 und des Trennschiebers 7 dargestellt. Die gezeigte Kontur des Kolbens 1a erstreckt sich vom größten Halmesser R des Teilkolbens 1a bis zum kleinsten Halbmesser r des Teilkolbens 1a; wenn der Trennschieber 7 sich gegen den Teilkolben 1a mit dem Halbmesser R bzw. r legt, befindet er sich in seiner Endstellung 11 bzw. 12. Der Beschleunigungsverlauf des Trennschiebers 7 ist gemäß dieser Darstellung sinusförmig. Dabei ist bei der Gestaltung der Kontur des Teilkolbens 1a entsprechend den oben erläuterten Zusammenhängen der Abrundungsradius des Trennschiebers 7 berücksichtigt.

6 Patentansprüche
4 Figuren

Patentansprüche

1. Volumenzähler mit
   a) mindestens einem in einem Gehäuse sich drehenden
      Kolben, der
      a1) eine ellipsenähnliche Kontur aufweist und mit
   b) mindestens einem Trennschieber, der
      b1) im Gehäuse geführt ist und
      b2) mit seinem freien Ende an der Umfangsfläche
           des Kolbens unter Bildung einer Dichtungsstelle
           zwischen Einlauf und Auslauf des Gehäuses
           anliegt,
   d a d u r c h   g e k e n n z e i c h n e t , daß
   c) der Kolben (1) bezüglich seiner Kontur (4) so
      ausgebildet ist, daß die Bewegung des Trennschiebers
      (7) stets mit einer stetig verlaufenden Beschleunigung erfolgt.

2. Volumenzähler nach Anspruch 1, d a d u r c h   g e -
   k e n n z e i c h n e t , daß
   d) der Kolben (1) bezüglich seiner Kontur (4) so ausgebildet ist, daß die Beschleunigung des Trennschiebers (7) im Bereich zwischen seinen jeweils
      aufeinanderfolgenden Endstellungen (11, 12) zwischen dem Wert Null und ihrem positiven bzw. nega-
      tiven Höchstwert geradlinig verläuft.

3. Volumenzähler nach Anspruch 1, d a d u r c h   g e -
   k e n n z e i c h n e t , daß
   e) der Kolben (1) bezüglich seiner Kontur (4) so ausgebildet ist, daß die Beschleunigung des Trennschiebers (7) im Bereich zwischen seinen jeweils
      aufeinanderfolgenden Endstellungen (11, 12) sinusförmig verläuft.

4. Volumenzähler nach einem der vorhergehenden Ansprüche, d a d u r c h   g e k e n n z e i c h n e t , daß

f) der Trennschieber (7) an seinem freien Ende abgerundet ist, wobei

f1) der Abrundungsradius einen Wert aufweist, der das 0,5- bis 0,6-fache der Dicke des Trennschiebers (7) beträgt (Fig. 4).

5. Volumenzähler nach Anspruch 4, d a d u r c h   g e k e n n z e i c h n e t , daß

g) der Trennschieber (7) eine Dicke aufweist, die das 0,125- bis 0,2-fache des größten Kolbenhalbmessers R beträgt (Fig. 4).

6. Volumenzähler nach einem der vorhergehenden Ansprüche, d a d u r c h   g e k e n n z e i c h n e t , daß

h) das Verhältnis des kleinsten Kolbenhalbmessers r zum größten Kolbenahlbmesser R zwischen den Werten 0,5 und 0,7 liegt (Fig. 4).

FIG 1

FIG 4

FIG 2

FIG 3

Europäisches
Patentamt

# EUROPÄISCHER RECHERCHENBERICHT

| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| D,A | DE - B - 1 143 339 (SIEMENS & HALSKE) <br><br> + Gesamt + <br><br> ---- | | G 01 F 3/06 |

**RECHERCHIERTE SACHGEBIETE (Int. Cl.³)**

G 01 F 3/00

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| WIEN | 17-06-1981 | STÖGER |

EPA form 1503.1   06.78